# EUROPÄISCHE PATENTSCHRIFT

(11) **EP 2 389 722 B1**
(45) Veröffentlichungstag und Bekanntmachung des Hinweises auf die Patenterteilung: **30.09.2015**
(21) Anmeldenummer: 10700557.1
(22) Anmeldetag: 18.01.2010
(51) Int. Cl.: H02M 3/158

(54) **GLEICHSPANNUNGSWANDLER FÜR EIN KRAFTFAHRZEUG**
DC CONVERTER FOR A MOTOR VEHICLE
CONVERTISSEUR CONTINU-CONTINU POUR VÉHICULE À MOTEUR

(30) Priorität: 22.01.2009 DE 102009005615
(43) Veröffentlichungstag der Anmeldung: 30.11.2011
(73) Patentinhaber: Continental Automotive GmbH, 30165 Hannover (DE)
(72) Erfinder: GÖTZENBERGER, Martin, 85051 Ingolstadt (DE); SYLLA, Sven, 93128 Regenstauf (DE)
(86) Internationale Anmeldenummer: PCT/EP2010/050508
(87) Internationale Veröffentlichungsnummer: WO 2010/084093

(56) Entgegenhaltungen:
- DE-A1-102005 015 992
- US-A- 5 691 629
- US-A- 5 982 156
- US-B1- 6 798 177

## Beschreibung

Die Erfindung betrifft einen Gleichspannungswandler für ein Kraftfahrzeug. Um elektrische Geräte in Kraftfahrzeugen auch bei schwankender Batteriespannung zu betreiben, werden Tiefsetzsteller eingesetzt, die eine konstante Spannung von beispielsweise 5 V bereitstellen sollen. Fällt die Batteriespannung beim Motorstart unter 5 V, so kann der Tiefsetzsteller eine Ausgangsspannung von 5 V nicht mehr halten, so dass es zu Ausfällen der vom Tiefsetzsteller versorgten Geräten kommt.

Die US 5,691,629 und die US 6,798,177 B1 zeigen sogenannte Boost-Buck Kaskaden, bei denen ein Hochsetzsteller eine Eingangsspannung in eine Zwischenspannung umwandelt und ein Tiefsetzsteller diese Zwischenspannung in eine Ausgangsspannung wandelt. Entsprechend kann ein Hochsetzsteller zwischen die Batterie und den Tiefsetzsteller geschaltet werden, damit eine Zwischenspannung von mehr als 5 V für den Eingang des Tiefsetzstellers bereitgestellt wird.

Allerdings ist es dabei besonders schwierig, die hintereinander geschalteten Hochsetzsteller und Tiefsetzsteller stabil zu halten. Dies ist insbesondere aufwändig, wenn zusätzlich ein Filter für Elektromagnetische Verträglichkeit (EMV-Filter) vorgesehen ist.

Aufgabe der Erfindung ist es, einen Gleichspannungswandler bereitzustellen, der es ermöglicht, auch bei unterschiedlichen Batteriespannungen eine Ausgangsspannung stabil bereitzustellen.

Diese Aufgabe wird mit dem Gegenstand des unabhängigen Anspruchs 1 gelöst. Vorteilhafte Weiterbildungen ergeben sich aus den abhängigen Ansprüchen.

Erfindungsgemäß wird ein Gleichspannungswandler für ein Kraftfahrzeug mit einer Batterie, die eine Batteriespannung bereitstellt, bereitgestellt. Gleichspannungswandler werden auch als DC-DC-Wandler bezeichnet. Der Gleichspannungswandler enthält einen Hochsetzsteller und einen Tiefsetzsteller. Der Hochsetzsteller ist zum Wandeln der Batteriespannung in eine Zwischenspannung vorgesehen. Die Zwischenspannung ist größer oder gleich der Batteriespannung. Der Tiefsetzsteller ist zum Empfang der von dem Hochsetzsteller ausgegebenen Zwischenspannung und zum Regeln einer Ausgangsspannung, die kleiner oder gleich der Zwischenspannung ist, vorgesehen. Der Hochsetzsteller steuert die Zwischenspannung, zumindest in einem Betriebsmodus, rückführungslos in Abhängigkeit der Batteriespannung auf einen Wert ungleich der Batteriespannung.

Die Vorrichtung beinhaltet den Vorteil, dass die Zwischenspannung nicht geregelt werden muss. Die Rückführung der Zwischenspannung in einen Regelkreis ist nicht notwendig. Um eine Vorgabe zu erfüllen, eine bestimmte Minimalspannung am Ausgang zu erzielen, reicht es aus, den Hochsetzsteller allein in Abhängigkeit von der Eingangsspannung, d.h. der Batteriespannung, ohne Rückführung der Zwischenspannung zu steuern. Ohne eine solche Rückführung bzw. Regelung kann sich der Hochsetzsteller nicht destabilisieren. Somit kann mit relativ geringem Schaltungsaufwand der Gleichspannungsregler stabil gehalten werden, ohne hohen Simulations- und Dimensionieraufwand treiben zu müssen. Der Gleichspannungswandler kann folglich über weite Arbeitsbereiche stabil gehalten werden.

In einer Ausführungsform ist dieser Betriebsmodus dadurch gekennzeichnet, dass die Batteriespannung geringer als ein erster vorbestimmter Wert ist und dass gleichzeitig die am Ausgang des Hochsetzstellers anliegende Last eine Minimallast überschreitet.

Bei einer Batteriespannung von 13,5 V wird beispielsweise in einer Ausführungsform als erster vorbestimmter Wert eine Spannung von 8 V und als Minimallast ein Strom von 10 Mikroampere gewählt. Als Minimallast kann auch eine Leistung z.B. 50 Mikrowatt gewählt werden.

In den Betriebsmodi, in denen die Batteriespannung größer als der erste vorbestimmte Wert ist oder die Last die Minimallast unterschreitet, kann in Ausführungsformen die Zwischenspannung anders bereit gestellt werden, wodurch das Dimensionieren der rückführungslosen Steuerung leichter wird.

Der Hochsetzsteller weist einen Schalter auf, der im Falle, dass die Batteriespannung größer als der vorbestimmte Wert ist, vollständig geöffnet wird, wodurch die Zwischenspannung im wesentlichen gleich der Batteriespannung ist. Bei hohen Batteriespannungen braucht somit der Hochsetzsteller nicht aktiv betrieben zu werden. Diese Maßnahme verringert den Stromverbrauch.

Erfindungsgemäß weist der Hochsetzsteller einen Schalter und eine Ansteuerschaltung für den Schalter auf, die den Schalter mit einem Pulsweiten-modulierten Signal ansteuert. Mit Hilfe des Pulsweiten-modulierten Signals kann die vom Hochsetzsteller bereitgestellte Energie genau eingestellt werden.

Falls das Tastverhältnis des Pulsweiten-modulierten Signals mit steigender Batteriespannung zunimmt, wird der Tatsache Rechnung getragen, dass bei niedrigerer Batteriespannung der Strom durch den Hochsetzsteller entsprechend vergrößert werden sollte.

In einer bevorzugten Ausführungsform wird die Ansteuerschaltung so eingestellt ist, dass ein vorbestimmtes Tastverhältnis, das kleiner als 100 % ist, bei minimaler Batteriespannung nicht überschritten wird. Die minimale Batteriespannung kann beispielsweise auf 0 V und das vorbestimmte Tastverhältnis auf 80 % festgelegt werden. Das derartig eingestellte Tastverhältnis stellt sicher, dass auch bei niedrigen Batteriespannungen noch Reserven zum Erhöhen des Tastverhältnisses vorhanden sind.

Besonders geeignet ist der Gleichspannungswandler, falls ein EMI-Filter (electromagnetic interference filter) zwischen einem Anschluss der Batterie und einem Eingang des Hochsetzstellers geschaltet ist. Ein EMI-Filter beeinflusst das Übertragungsverhalten des Systems zum Bereitstellen der Ausgangsspannung. Bei geregeltem Hochsetzsteller, geregeltem Tiefsetzsteller und EMI-Filter ist es besonders schwierig, die Stabilität einzustellen.

In einer Ausbildungsform weist die Ansteuerschaltung einen Subtrahierer zum Subtrahieren der Batteriespannung von einer vorbestimmten Spannung, und einen Vergleicher zum Einstellen des Tastverhältnisses derart, dass das Tastverhältnis proportional zum vom Subtrahierer ausgegebenen Signal ist, auf.

Falls der Vergleicher zum Vergleichen des Ausgangssignals des Substrahieres mit einer Referenzspannung, die einen dreieckförmigen Verlauf hat, eingerichtet ist, stellt der Vergleicher an seinem Ausgang ein Pulsweiten-moduliertes Signal bereit, das invers proportional zur Batteriespannung ist und das unmittelbar den Schalter der Hochsetzstellers steuern kann.

Vorzugsweise wird die Zwischenspannung so eingestellt, dass sie im Wesentlichen konstant in einem Batteriespannungsbereich, der von einem vorbestimmten Minimalwert zu einer nominellen Batteriespannung reicht, ist. Damit erhält der Tiefsetzsteller an seinem Eingang im wesentlichen die gleiche Spannung, hinsichtlich der er optimiert werden kann.

In einer Ausführungsform ist eine Diode vorgesehen zum Ausschalten des Hochsetzstellers im Fall, dass die Zwischenspannung den ersten vorbestimmten Wert überschreitet. Damit wird verhindert, dass bei geringer Last am Ausgang des Hochsetzstellers die Zwischenspannung so hohe Werte annimmt, dass sie angeschlossene Schaltungen zerstören kann.

Die Erfindung betrifft auch eine Baugruppe aus einem erfindungsgemäßen Gleichspannungswandler und einer Batterie, die die Batteriespannung für den Hochsetzsteller des Gleichspannungswandlers bereitstellt.

Die Erfindung betrifft ferner die Verwendung einer solche Baugruppe in einem Kraftfahrzeug. Speziell bei Startvorgängen des Motors sinkt die Batteriespannung stark ab. Die dabei entstehenden Schwankungen dieser Spannung sind schwer vorherbestimmbar, so dass die Stabilität des Gleichspannungswandlers sehr wichtig ist.

Die Erfindung betrifft auch ein Verfahren nach Anspruch 12 zum Betrieb eines erfindungsgemäßen Gleichspannungswandlers. Bei diesem Verfahren wird der Hochsetzsteller rückführungslos so angesteuert, dass er die Zwischenspannung in Abhängigkeit der Batteriespannung bereitstellt. Die Ausgangsspannung wird mittels einer Spannungsregelung durch den Tiefsetzsteller geregelt wird.

Die Erfindung wird nun anhand der beigefügten Figuren erläutert. Dabei zeigt
- Figur 1: ein Ausführungsbeispiel eines erfindungsgemäßen Gleichspannungswandlers;
- Figur 2: die Spannungsverläufe an ausgewählten Knoten des Gleichspannungswandlers der Figur 1;
- Figur 3: einen Simulationsschaltplan für einen erfindungsgemäßen Gleichspannungswandler;
- Figur 4: simulierte Spannungsverläufe des Gleichspannungswandlers nach Figur 3.

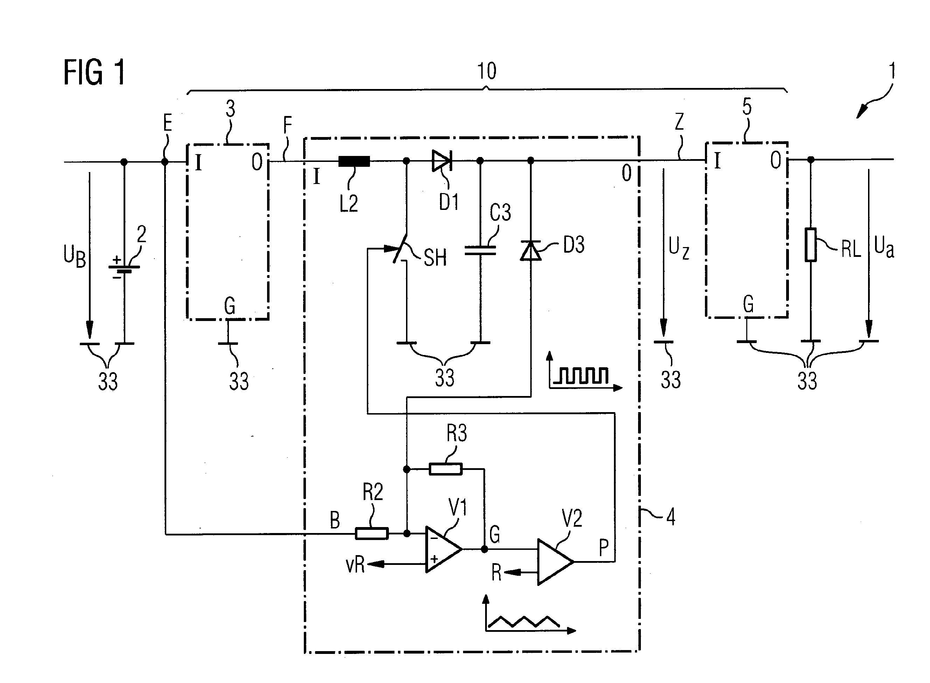

Figur 1 zeigt ein Ausführungsbeispiel einer Schaltungsanordnung mit einem erfindungsgemäßen Gleichspannungswandler. Die Schaltungsanordnung 1 enthält eine Batterie 2, einen EMI-Filter (electromagnetic interference filter) 3, einen Hochsetzsteller 4, einen Tiefsetzsteller 5 sowie eine durch einen ohm'schen Widerstand RL dargestellte Last.

Die Batterie 2 stellt zwischen ihrem Pluspol und ihrem Minuspol eine Spannung von nominellen 13,5 V bereit. Der Minuspol ist mit der Masse 33 und der Pluspol ist mit einem Knoten E verbunden. Der Knoten E bildet einen Eingang für den Gleichspannungswandler 10, der den EMI-Filter 3, den Hochsetzsteller 4 und den Tiefsetzsteller 5 enthält. Der EMI-Filter 3 ist mit seinem Eingang I an den Knoten E angeschlossen, während sein Eingang G mit der Masse 33 verbunden ist. Der Ausgang O des EMI-Filters ist mit dem Knoten F verbunden.

Der Hochsetzsteller 4 enthält eine Drossel L2, einen Schalter SH, eine erste Diode D1 und einen ersten Kondensator C3. Ein erster Anschluss der Drossel L2 ist mit dem Knoten F verbunden, während sein zweiter Anschluss mit der Anode der ersten Diode D1 und einem ersten Anschluss der Laststrecke des Schalters SH verbunden ist. Der zweite Anschluss der Laststrecke des Schalters SH ist mit der Masse 33 verbunden. Bei geschlossenem Schalter fließt ein Strom zwischen den beiden Anschlüssen der Laststrecke des Schalters SH, während der Stromfluss zwischen den beiden Anschlüssen der Laststrecke bei geöffnetem Schalter SH unterbrochen ist. Der Schalter SH ist beispielsweise als n-Kanal MOSFET ausgebildet. Dabei ist der erste Anschluss der Laststrecke die Drain, der zweite Anschluss der Laststrecke die Source und der Steueranschluss des Schalters SH das Gate.

Die Kathode der ersten Diode D1 ist mit einer ersten Platte des Kondensators C3 verbunden, dessen zweite Platte mit der Masse 33 verbunden ist. Die Kathode der ersten Diode D1 ist zudem mit einem Ausgang O des Hochsetzstellers 4 verbunden, der an dem Zwischenknoten Z angeschlossen ist.

Der Hochsetzsteller 4 enthält zudem einen Operationsverstärker V1, einen Komparator V2, einen ersten Widerstand R2, einen zweiten Widerstand R3 und eine zweite Diode D3. Ein erster Anschluss des ersten Widerstands R2 ist mit dem Eingang B des Hochsetzstellers 4 verbunden, der mit dem Knoten E verbunden ist. Der zweite Anschluss des ersten Widerstands R2 ist mit dem invertierenden Eingang des Operationsverstärkers V1, mit einem ersten Anschluss des zweiten Widerstands R3 und der Anode der zweiten Diode D3 verbunden.

Der zweite Anschluss des zweiten Widerstands R3 ist mit dem Ausgang des ersten Operationsverstärkers V1 über den Verbindungsknoten G verbunden. Der nicht-invertierende Eingang des Operationsverstärkers V1 ist mit einem Knoten verbunden, der von einer Referenzspannungsquelle gespeist wird, so dass zwischen diesem Knoten und der Masse 33 eine erste, konstante Referenzspannung vR anliegt.

Der Knoten G ist auch mit einem ersten Eingang des Komparators V2 verbunden, an dessen zweitem Eingang eine zweite Referenzspannung R anliegt. Die Referenzspannung R hat einen dreiecksförmigen Verlauf, dessen Minimalwert allerdings größer als 0 V ist. Der Ausgang des Komparators V2 ist mit dem Knoten P verbunden, an den der Steuereingang des Schalters SH angeschlossen ist.

Der Tiefsetzsteller 5 weist einen ersten Eingang I, einen zweiten Eingang G und einen Ausgang O auf. Der erste Eingang I ist mit dem Zwischenknoten Z, der Eingang G mit der Masse 33 und der Ausgang O mit einem ersten Anschluss des Lastwiderstands RL verbunden. Der zweiter Anschluss des Lastwiderstands RL mit der Masse 33 verbunden.

Die Batterie 2 ist über den Knoten E und das EMI-Filter 3 an den Eingang I des Hochsetzstellers 4 gekoppelt. Am Eingang I liegt im wesentlichen die gleiche Spannung wie am Knoten E an, allerdings sind hochfrequente Signalanteile, die die elektromagnetische Verträglichkeit der Schaltungsanordnung 1 beeinträchtigen könnten, herausgefiltert.

Wenn der Schalter SH abwechselnd geöffnet und geschlossen wird, wird eine Ausgangsspannung zwischen dem Zwischenknoten Z und der Masse 33 erzeugt, die höher als die Batteriespannung ist. Bei geschlossenem Schalter SH liegt die Batteriespannung im wesentlichen über der Drossel L2 an. Der Strom durch die Spule steigt, wodurch auch die in der Drossel L2 gespeicherte Energie steigt.

Wird der Schalter SH nun geöffnet, so versucht die Drossel L2 den Stromfluss aufrecht zu halten, wodurch das Potential am zweiten Anschluss der Drossel L2 ansteigt. Dadurch wird die erste Diode D1 leitend und Strom durch die erste Diode D1 fließt in den Kondensator C3, der damit aufgeladen wird.

Die Ansteuerung des Schalters SH erfolgt durch die Ansteuerschaltung, die aus dem Operationsverstärker V1, dem Komparator V2 und den beiden Widerstände R2 und R3 gebildet ist. Als erste Referenzspannung vR wird 12 V an den nicht-invertierenden Eingang des Operationsverstärkers V1 angelegt. Der Operationsverstärker V1 bildet zusammen mit den Widerständen R2 und R3 einen Subtrahierer, der die Spannung am invertierenden Eingang von der am nicht-invertierenden Eingang abzieht. Die Batteriespannung wird mit dem Operationsverstärker V1 sowie der R2/R3-Referenz so umgewandelt, dass im Knoten G eine zur Batteriespannung invers proportional verlaufende Spannung anliegt. Das Übertragungsverhalten wird dabei durch die Widerstände R3 und R2 eingestellt.

Die Spannung am Knoten G wird mit dem Komparator V2 mit der zweiten Referenzspannung R, auch Rampenspannung R genannt, verglichen. Am Ausgang des Komparators V2 zeigt sich ein pulsweiten-modulierte Signal, das den Schalter SH ansteuert. Auf diese Weise wird die zum Ausgang O des Hochsetzstellers geleitete Energie eingestellt. Je höher das Tastverhältnis des pulsweiten-modulierten Signals, desto größer ist die vom Eingang zum Ausgang fließende Energie, während die Energie sinkt, wenn das Tastverhältnis geringer wird. Als Tastverhältnis wird das Verhältnis zwischen der Zeit, die der Schalter SH geschlossen ist, zu der Zeit, in der der Schalter SH geöffnet ist, bezeichnet. Das Tastverhältnis wird vorzugsweise in Prozent angegeben.

Bei kontinuierlichem Drosselstrom und idealen Komponenten gilt der theoretische Zusammenhang: U_{Z} = U_{F}/(1 - dc). Dabei ist U_{Z} die Spannung zwischen dem Zwischenknoten Z und der Masse 33, U_{F} die Spannung zwischen dem Knoten F und der Masse 33 und dc das Tastverhältnis des Schalters SH. Allerdings ist dabei zu beachten, dass ein bestimmter Minimalstrom durch die Last fließen muss. Oberhalb dieses bestimmten Minimalstroms steigt die Ausgangsspannung U_{Z} des Hochsetzstellers 4 proportional zum Tastverhältnis an.

In dem gezeigten Beispiel wurde die Verstärkung des Operationsverstärkers V1 so gewählt, dass bei einer Batteriespannung, die größer als ein erster vorbestimmter Wert von 8 V ist, der Schalter SH dauerhaft offen bleibt. Die Ausgangsspannung U_{Z} ist somit gleich der Batteriespannung, wobei ideale Bauteile vorausgesetzt werden. Die Ausgangsspannung ist damit groß genug, um einen sicheren Betrieb des Tiefsetzstellers 5 zu gewährleisten.

Sinkt die Batteriespannung unter 8 V, so liegt am Knoten P ein pulsweiten-moduliertes Signal an, dessen Tastverhältnis dc mit sinkender Batteriespannung weiter ansteigt. Das Verhältnis der Widerstände R2 und R3 wird so gewählt, dass die Spannung U_{Z} in diesem Betriebsbereich möglichst konstant ist. Bei theoretisch idealen Komponenten kann die Ausgangsspannung U_{Z} des Hochsetzstellers 4 oberhalb einer bestimmten Minimallast theoretisch konstant gehalten werden.

Falls eine bestimmte Minimallast unterschritten wird, d.h. die von dem Tiefsetzsteller und der Last RL verbrauchte Leistung ist zu gering, gilt der obige mathematische Zusammenhang nicht mehr. Die Ausgangsspannung U_{Z} steigt bei Nulllast auf beliebig hohe Ausgangsspannungen an. Um zu vermeiden, dass bei einer Nulllast am Ausgang die Ausgangsspannung U_{Z} des Hochsetzstellers unzulässig hohe Werte überschreitet, ist die zweite Diode D3, die als Zenerdiode ausgebildet ist, in die Schaltung eingefügt.

Steigt die Spannung U_{Z} über einen vorbestimmten Wert, schaltet die zweite Diode D3 durch, so dass sich das Potential am nicht-invertierenden Eingang des Operationsverstärkers V1 stark erhöht. Dadurch sinkt die Spannung am Knoten G unter den Minimalwert der Rampenspannung R, so dass ein Tastverhältnis dc von 0% ausgegeben wird. Der Schalter SH wird geöffnet. Oberhalb einer bestimmten Schutzspannung am Zwischenknoten Z ist das pulsweiten-modulierte Signal somit blockiert.

Ebenso ist es möglich, und in der Praxis auch bevorzugt, das maximale Tastverhältnis des pulsweiten-modulierten Signals auf sinnvolle Werte zu begrenzen. Ein Tastverhältnis von 100% würde zu einem dauerhaften Einschalten des Schalters SH und somit zu einer Fehlfunktion führen. Falls die minimale Eingangsspannung, d.h. die Batteriespannung, gleich 4 V ist, reicht in dem gezeigten Ausführungsbeispiel ein Tastverhältnis von circa 33% aus, um die für den Tiefsetzsteller 5 erforderliche Minimalspannung am Knoten Z bereitzustellen. Der Minimalwert der Eingangsspannung ist beispielsweise 6 V und ist so bemessen, dass der Tiefsetzsteller 5 sicher funktioniert.

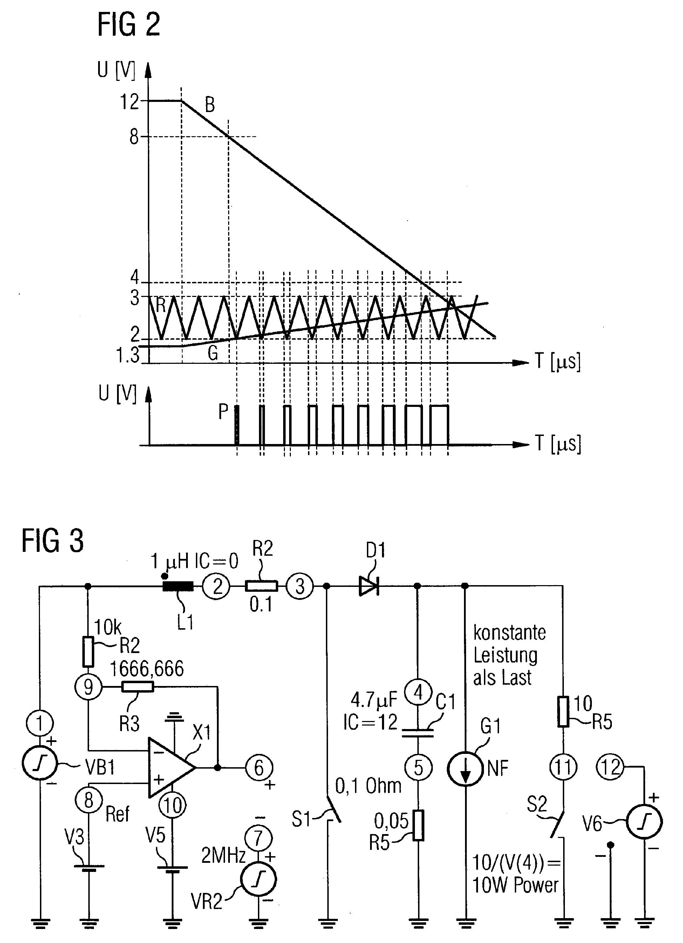

Figur 2 zeigt den zeitlichen Verlauf der Spannung am Eingang B. Dieser Verlauf ist gleich dem Verlauf der Batteriespannung. Zudem zeigt Figur 2 den zeitlichen Verlauf der Steuerspannung am Knoten G, den zeitlichen Verlauf der Rampenspannung am Knoten R und den zeitlichen Verlauf des pulsweiten-modulierten Signals am Knoten P. Der Hochsetzsteller 4 beginnt zu takten, d.h. das Tastverhältnis ist größer Null, wenn die Spannung am Knoten G die Rampenspannung am Knoten R schneidet.

Die Rampenspannung bildet ein Rechtecksignal mit einem Maximalwert von 3 V und einem Minimalwert von 2 V. Ist die Batteriespannung in dem Bereich zwischen 12 V und 8 V, ist die Spannung am Knoten G kleiner als 2 V und somit kleiner als die Rampenspannung. Sinkt die Batteriespannung unter 8 V, so schneidet die Spannung am Knoten G die Rampenspannung, so dass das Tastverhältnis größer Null wird. Je weiter die Batteriespannung U_{Z} sinkt, umso größer ist das Tastverhältnis des Pulsweiten-modulierten Signals am Knoten P. Der Hochsetzsteller 4 wirkt der abfallenden Batteriespannung mit einem steigenden Tastverhältnis entgegen.

Wie gezeigt, wird der Hochsetzsteller 4 nicht mit Hilfe einer Regelung, sondern mit Hilfe einer Steuerung angesteuert. Dies gilt zumindest für den Bereich, in dem die Batteriespannung einen vorbestimmten Wert von 8 V unterschreitet und ein Minimalstrom am Ausgang O des Hochsetzstellers 4 fließt. Es reicht hier aus, den Hochsetzsteller 4 allein in Abhängigkeit von der Batteriespannung, ohne Rückführung der Ausgangsspannung U_{Z} in einem Regelkreis, zu steuern. Ohne die Rückführung bzw. die Regelung kann der Hochsetzsteller 4 nicht destabilisieren. Der Wert der Zwischenspannung ist bei dieser Steuerung in den überwiegenden Fällen ungleich der Batteriespannung.

Figur 3 zeigt die Schaltung zur Simulation der Ausgangsspannung U_{Z} des gesteuerten Hochsetzstellers 4 bei Anliegen eines spezifizierten Pulses, der den Motoranlassvorgang simuliert. Zusätzlich wurden der Ausgangsspannung U_{Z} periodische Lastwechsel überlagert, um zu prüfen, wie sich die Ausgangsspannung ohne Rückführung der Ausgangsgröße, d.h. ohne Regelung verhält.

Die Spannungsquelle VB1 ist die Eingangsspannung für den Hochsetzsteller. Die beschriebene Vorsteuerung übernimmt die Schaltung R2/R3/X1/V3. Dabei ist X1 der Operationsverstärker und die Spannungsquelle V 82 stellt die erste Referenzspannung VR zur Verfügung. Der Knoten G wird hier als Knoten 6 bezeichnet. Die Spannungsquelle V5 liefert die Versorgungsspannung für den Operationsverstärker X1. Die Spannungsversorgung VR2 liefert zwischen der Masse 33 und dem Knoten 7 eine periodische Dreieckspannung zwischen 2 und 3 V mit einer Frequenz von 2 MHz.

Der Schalter S1 wird eingeschaltet, wenn die Spannung zwischen den Knoten 6 und 7 10 mV überschritten hat. Überschreitet die Spannung im Knoten 6 den Momentanwert der Dreieckspannung im Knoten 7 zuzüglich 10 mV, so schließt der Schalter S1. Die Drossel L2 aus Figur 1 ist als eine Reihenschaltung einer Induktivität L1 und einem Widerstand R1 dargestellt. Der Kondensator C3 aus Figur 1 ist als ein Kondensator C1 und ein Widerstand R5, die in Serie geschaltet sind, dargestellt.

Die Last enthält die konstante Last G 1 und eine durch den Widerstand R5 und den Schalter S1 gebildete variable Last. Die konstante Last G1 ist eine Leistungssenke, die den Hochsetzsteller 5 mit 10 W belastet. Der Schalter S2 schaltet den Lastwiderstand R5 periodisch alle 100 µs an den Ausgang des Hochsetzstellers 4.

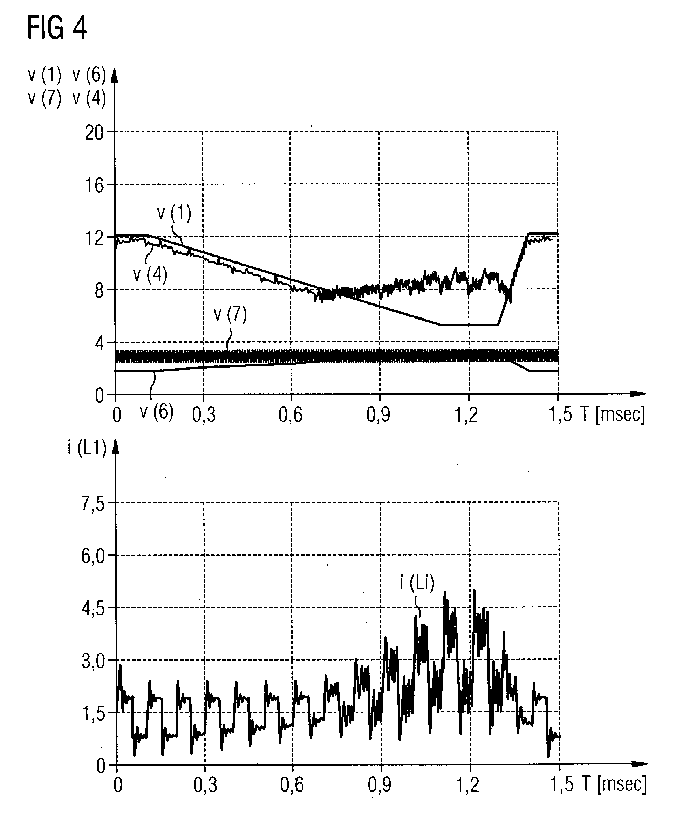

Figur 4 zeigt simulierte Spannungsverläufe und Stromverläufe an ausgewählten Knoten des Gleichspannungswandlers nach Figur 3. Im oberen Diagramm sind die Spannungen über der Zeit gezeigt. Die Spannungen sind jeweils auf die Masse 33 bezogen. Die Kurve v(1) zeigt die Batteriespannung, die bei einem Motorstartvorgang von 12 V auf etwa 5 V absinkt. Die zugehörige Spannung am Hochsetzstellerausgang, also am Knoten Z, ist durch die Kurve v(4) gezeigt. Es wird deutlich, dass die Ausgangsspannung des Hochsetzstellers 4 zunächst mit der Batteriespannung auf unter 8 V sinkt, sie steigt danach aber über die Batteriespannung. Es wird deutlich, dass die Kurve v(4), und somit die Ausgangsspannung des Hochsetzstellers, 7,5 V nicht unterschreitet. Ein nachgeschalteter Tiefsetzsteller kann somit an seinem Ausgang die 5 V halten. Die Lastwechselreaktion ist deutlich erkennbar. Die Kurve v(4) zeigt deutliche, aber unproblematische Resonanzen während des Lastwechsels. Die Kurve v(6) zeigt die Ausgangsspannung des Operationsverstärkers X1. Die Kurve v(7) zeigt die Rampenspannung am Knoten 6.

Im unteren Diagramm ist der Verlauf des Drosselstroms I(L1) über der Zeit gezeigt. Der Drosselstrom ist, wie zuvor beschrieben, notwendigerweise kontinuierlich, also stets größer Null. Die Resonanzen sind deutlich sichtbar. Da der Hochsetzsteller 4 nicht geregelt ist, zeigen sich die Resonanzen am Ausgang des Hochsetzstellers 4. Diese Resonanzen sind bedämpft, die Höhe der Schwinger wird durch die Verluste der Filterkomponenten im Hochsetzsteller 4 und der Steilheit des Lastwechselstromanstiegs bestimmt.

Bei vorgeschaltetem EMV - Filter können sich die Resonanzen, abhängig von der Filtergüte des EMV - Filters, verstärken. In der Praxis ist die Stromversorgung so auszulegen, dass die Resonanzunterschwinger die Minimalspannung des nachgeschalteten Tiefsetzstellers 5 nicht unterschreitet, und die Regebandbreite des Tiefsetzstellers ausreichend genug ist, um diese Spannungsschwankungen zum Ausgang hin ausreichend zu dämpfen. Ein Aufschwingen der Resonanzspannungen ist, einmal dimensioniert - nicht zu befürchten. Die Schaltungsanordnung arbeitet daher stabil.

## Patentansprüche

1. Gleichspannungswandler für ein Kraftfahrzeug mit einer Batterie (B1), die eine Batteriespannung (UB) bereitstellt, wobei der Gleichspannungswandler folgendes enthält:
- einen Hochsetzsteller (4) mit einem Schalter (SH) zum Wandeln der Batteriespannung in eine Zwischenspannung (UZ), wobei die Zwischenspannung (UZ) größer oder gleich der Batteriespannung (UB) ist,
- einen Tiefsetzsteller (5) zum Empfang der von dem Hochsetzsteller (4) ausgegebenen Zwischenspannung (UZ) und zum Regeln einer Ausgangsspannung (Ua), die kleiner oder gleich der Zwischenspannung (UZ) ist,
**dadurch gekennzeichnet,**
**dass** der Hochsetzsteller (4) zum, zumindest in einem Betriebsmodus, rückführungsfreien Steuern der Zwischenspannung (UZ) in Abhängigkeit der Batteriespannung (UB) auf einen Wert ungleich der Batteriespannung eingerichtet ist,
wobei der Hochsetzsteller (4) eine Ansteuerschaltung (V1, V2, R2, R3) für den Schalter (SH) aufweist, die den Schalter (SH) mit einem Pulsweiten-modulierten Signal (P) ansteuert, dessen Tastverhältnis (dc) mit steigender Batteriespannung abnimmt.

2. Gleichspannungswandler nach Anspruch 1,
**dadurch gekennzeichnet, dass** mindestens ein Betriebsmodus, in dem der Hochsetzsteller (4) zum rückführungsfreien Steuern der Zwischenspannung (UZ) in Abhängigkeit der Batteriespannung (UB) eingerichtet ist, **dadurch gekennzeichnet ist, dass** die Batteriespannung (UB) geringer als ein erster vorbestimmten Wert ist und die am Ausgang (Z) des Hochsetzstellers (4) anliegende Last eine Minimallast überschreitet.

3. Gleichspannungswandler nach Anspruch 2,
**dadurch gekennzeichnet, dass** der Hochsetzsteller (4) einen Schalter (SH) aufweist und der Hochsetzsteller (4) zum vollständigen Öffnen im Falle, dass die Batteriespannung (UB) größer als der vorbestimmte Wert ist, eingerichtet ist.

4. Gleichspannungswandler nach einem der Ansprüche 1 bis 3,
**dadurch gekennzeichnet, dass** die Ansteuerschaltung (V1, V2, R2, R3) so eingestellt ist, dass ein vorbestimmtes Tastverhältnis (dc), das kleiner als 100 %, bei minimaler Batteriespannung nicht überschritten wird.

5. Gleichspannungswandler nach einem der vorhergehenden Ansprüche, **gekennzeichnet durch** ein EMI-Filter (electromagnetic interference filter) zwischen einem Anschluss der Batterie (2) und einem Eingang des Hochsetzstellers (4).

6. Gleichspannungswandler nach einem der vorhergehenden Ansprüche, **dadurch gekennzeichnet, dass** die Ansteuerschaltung
- einen Subtrahierer (V1, R2, R3) zum Subtrahieren der Batteriespannung von einer Referenzspannung, und
- einen Vergleicher (V2) zum Einstellen des Tastverhältnisses (dc) derart, dass das Tastverhältnis (dc) proportional zum vom Subtrahierer (V1, R2, R3) ausgegebenen Signal ist, aufweist.

7. Gleichspannungswandler nach Anspruch 6,
**dadurch gekennzeichnet, dass** der Vergleicher zum Vergleichen des Ausgangssignals des Substrahieres mit einer Referenzspannung (R), die einen dreieckförmigen Verlauf hat, eingerichtet ist.

8. Gleichspannungswandler nach einem der vorhergehenden Ansprüche, **dadurch gekennzeichnet, dass** die Zwischenspannung (UZ) so eingestellt wird, dass sie im wesentlichen konstant in einem Batteriespannungsbereich, der von einem vorbestimmten Minimalwert zu einer nominellen Batteriespannung reicht, ist.

9. Gleichspannungswandler nach einem der vorhergehenden Ansprüche,
**dadurch gekennzeichnet, dass** eine Diode vorgesehen ist zum Ausschalten des Hochsetzstellers (4) im Fall, dass die Zwischenspannung den ersten vorbestimmten Wert überschreitet.

10. Baugruppe aus einem Gleichspannungswandler nach einem der Ansprüche 1 bis 9 und einer Batterie, die die Batteriespannung für den Hochsetzsteller (4) des Gleichspannungswandlers bereitstellt.

11. Verwendung einer Baugruppe nach Anspruch 10 in einem Kraftfahrzeug.

12. Verfahren zum Betrieb eines Gleichspannungswandlers nach einem der Ansprüche 1 bis 9, mit den Verfahrensschritten rückführungsloses Ansteuern des Hochsetzstellers (4), so dass der Hochsetzsteller (4) die Zwischenspannung in Abhängigkeit der Batteriespannung (UB) bereitstellt, Regeln der Ausgangsspannung ( Ua ) mittels einer Spannungsregelung durch den Tiefsetzsteller ( 5 ), und Ansteuern des Schalters ( SH ) des Hochsetzstellers mit einem Pulsweitenmodulierten Signal, dessen Tastverhältnis ( dc ) mit steigender Batteriespannung abnimmt.

## Claims

1. DC/DC voltage converter for a motor vehicle having a battery (B1), which provides a battery voltage (UB), with the DC/DC voltage converter containing the following:
- a step-up converter (4) having a switch (SH) for conversion of the battery voltage to an intermediate voltage (UZ), with the intermediate voltage (UZ) being greater than or equal to the battery voltage (UB),
- a step-down converter (5) for receiving the intermediate voltage (UZ) which is output from the step-up converter (4) and for regulation of an output voltage (Ua) which is less than or equal to the intermediate voltage (UZ),
**characterized**
**in that** the step-up converter (4) is designed for open-loop control, at least in one operating mode, of the intermediate voltage (UZ) as a function of the battery voltage (UB) at a value which is not equal to the battery voltage,
wherein the step-up converter (4) has a control circuit (V1, V2, R2, R3) for the switch (SH), which control circuit controls the switch (SH) with a pulse-width-modulated signal (P) the duty ratio (dc) of which decreases as the battery voltage rises.

2. DC/DC voltage converter according to Claim 1, **characterized in that** at least one operating mode, in which the step-up converter (4) is designed for open-loop control of the intermediate voltage (UZ) as a function of the battery voltage (UB), is **characterized in that** the battery voltage (UB) is less than a first predetermined value, and the load which is connected to the output (Z) of the step-up converter (4) exceeds a minimum load.

3. DC/DC voltage converter according to Claim 2, **characterized in that** the step-up converter (4) has a switch (SH), and the step-up converter (4) is designed to open completely when the battery voltage (UB) is greater than the predetermined value.

4. DC/DC voltage converter according to one of Claims 1 to 3, **characterized in that** the control circuit (V1, V2, R2, R3) is set such that a predetermined duty ratio (dc) which is less than 100%, is not exceeded at the minimum battery voltage.

5. DC/DC voltage converter according to one of the preceding claims,
**characterized by** an EMI filter (electromagnetic interference filter) between one connection of the battery (2) and one input of the step-up converter (4).

6. DC/DC voltage converter according to one of the preceding claims, **characterized in that** the control circuit has
- a subtractor (V1, R2, R3) for subtraction of the battery voltage from a reference voltage, and
- a comparator (V2) for setting the duty ratio (dc) such that the duty ratio
(dc) is proportional to the signal which is output from the subtractor (V1, R2, R3).

7. DC/DC voltage converter according to Claim 6, **characterized in that** the comparator is designed to compare the output signal from the subtractor with a reference voltage (R) which has a triangular profile.

8. DC/DC voltage converter according to one of the preceding claims, **characterized in that** the intermediate voltage (UZ) is set such that it is substantially constant in a battery voltage range which extends from a predetermined minimum value to a nominal battery voltage.

9. DC/DC voltage converter according to one of the preceding claims, **characterized in that** a diode is provided in order to switch the step-up converter (4) off in the situation when the intermediate voltage exceeds the first predetermined value.

10. Assembly comprising a DC/DC voltage converter according to one of Claims 1 to 9 and a battery which provides the battery voltage for the step-up converter (4) in the DC/DC voltage converter.

11. Use of an assembly according to Claim 10 in a motor vehicle.

12. Method for operation of a DC/DC voltage converter according to one of Claims 1 to 9, having the method steps of
open-loop control of the step-up converter (4), such that
the step-up converter (4) provides the intermediate voltage as a function of the battery voltage (UB), closed-loop control of the output voltage (Ua) by means of voltage regulation by the step-down converter (5), and control of the switch (SH) of the step-up converter with a pulse-width-modulated signal the duty ratio (dc) of which decreases as the battery voltage rises.

## Revendications

1. Convertisseur de courant continu pour un véhicule automobile avec une batterie (B1), qui génère une tension de batterie (UB), le convertisseur de courant continu contenant ce qui suit :
- un convertisseur élévateur (4) avec un interrupteur (SH) pour convertir la tension de la batterie en une tension intermédiaire (UZ), la tension intermédiaire (UZ) étant supérieure ou égale à la tension de la batterie (UB),
- un convertisseur abaisseur (5) pour recevoir la tension intermédiaire (UZ) générée par le convertisseur élévateur (4) et pour réguler une tension de sortie (Ua) qui est inférieure ou égale à la tension intermédiaire (UZ),
**caractérisé en ce que**
le convertisseur élévateur (4) est conçu pour le contrôle sans retour, au moins dans un mode de fonctionnement, de la tension intermédiaire (UZ) en fonction de la tension de la batterie (UB) jusqu'à une valeur différente de la tension de batterie, le convertisseur élévateur (4) comprenant un circuit de pilotage (V1, V2, R2, R3) pour l'interrupteur (SH), qui pilote l'interrupteur (SH) avec un signal modulé en largeur d'impulsion (P), dont le rapport cyclique (dc) diminue lorsque la tension de la batterie augmente.

2. Convertisseur de courant continu selon la revendication 1,
**caractérisé en ce qu'**au moins un mode de fonctionnement, dans lequel le convertisseur élévateur (4) est conçu pour le contrôle sans retour de la tension intermédiaire (UZ) en fonction de la tension de la batterie (UB), **caractérisé en ce que** la tension de la batterie (UB) est inférieure à une première valeur prédéterminée et la charge appliquée à la sortie (Z) du convertisseur élévateur (4) dépasse une charge minimale.

3. Convertisseur de courant continu selon la revendication 2,
**caractérisé en ce que** le convertisseur élévateur (4) comprend un interrupteur (SH) et le convertisseur élévateur (4) est conçu pour une ouverture complète dans le cas où la tension de la batterie (UB) est supérieure à la valeur prédéterminée.

4. Convertisseur de courant continu selon l'une des revendications 1 à 3,
**caractérisé en ce que** le circuit de pilotage (V1, V2, R2, R3) est réglé de façon à ce qu'un rapport cyclique (dc) prédéterminé, qui est inférieur à 100%, ne soit pas dépassé lorsque la tension de la batterie est minimale.

5. Convertisseur de courant continu selon l'une des revendications précédentes,
**caractérisé par** un filtre EMI (electromagnetic interference filter) entre une connexion de la batterie (2) et une entrée du convertisseur élévateur (4).

6. Convertisseur de courant continu selon l'une des revendications précédentes,
**caractérisé en ce que** le circuit de pilotage
- comprend un soustracteur (V1, R2, R3) pour la soustraction de la tension de la batterie d'une tension de référence et
- un comparateur (V2) pour le réglage du rapport cyclique (dc) de façon à ce que le rapport cyclique (dc) soit proportionnel au signal généré par le soustracteur (V1, R2, R3).

7. Convertisseur de courant continu selon la revendication 6,
**caractérisé en ce que** le comparateur est conçu pour comparer le signal de sortie du soustracteur avec une tension de référence (R) qui présente un tracé triangulaire.

8. Convertisseur de courant continu selon l'une des revendications précédentes,
**caractérisé en ce que** la tension intermédiaire (UZ) est réglée de façon à ce qu'elle soit globalement constante dans une plage de tension de batterie qui s'étend d'une valeur minimale prédéterminée à une tension de batterie nominale.

9. Convertisseur de courant continu selon l'une des revendications précédentes,
**caractérisé en ce qu'**une diode est prévue pour l'arrêt du convertisseur élévateur (4) dans le cas où la tension intermédiaire dépasse la première valeur prédéterminée.

10. Sous-ensemble constitué d'un convertisseur de courant continu selon l'une des revendications 1 à 9 et d'une batterie, qui génère la tension de batterie pour le convertisseur élévateur (4) du convertisseur de courant continu.

11. Utilisation d'un sous-ensemble selon la revendication 10 dans un véhicule automobile.

12. Procédé de fonctionnement d'un convertisseur de courant continu selon l'une des revendications 1 à 9, avec les étapes de procédé :
pilotage sans retour du convertisseur élévateur (4), de façon à ce que le convertisseur élévateur (4) génère la tension intermédiaire en fonction de la tension de la batterie (UB),
régulation de la tension de sortie (Ua) à l'aide d'une régulation de tension par le convertisseur abaisseur (5) et
pilotage de l'interrupteur (SH) du convertisseur élévateur avec un signal modulé en largeur d'impulsion dont le rapport cyclique (dc) diminue lorsque la tension de la batterie augmente.
